# EUROPÄISCHE PATENTSCHRIFT

(11) **EP 2 689 078 B1**
(45) Veröffentlichungstag und Bekanntmachung des Hinweises auf die Patenterteilung: **10.06.2015**
(21) Anmeldenummer: 12717261.7
(22) Anmeldetag: 18.04.2012
(51) Int. Cl.: E04C 3/07, E04C 3/09, E04C 3/08, B60R 19/18, E04B 2/74

(54) **PROFILELEMENT UND VERFAHREN ZUM HERSTELLEN EINES PROFILELEMENTS**
PROFILED ELEMENT AND METHOD FOR PRODUCING A PROFILED ELEMENT
ÉLÉMENT PROFILÉ ET DISPOSITIF PERMETTANT DE PRODUIRE UN ÉLÉMENT PROFILÉ

(30) Priorität: 20.04.2011 DE 102011018284
(43) Veröffentlichungstag der Anmeldung: 29.01.2014
(73) Patentinhaber: Protektorwerk Florenz Maisch GmbH & Co. KG, 76571 Gaggenau (DE)
(72) Erfinder: WILLERSCHEID, Heiner, 77886 Lauf (DE)
(74) Vertreter: Manitz, Finsterwald & Partner GbR
(86) Internationale Anmeldenummer: PCT/EP2012/057055
(87) Internationale Veröffentlichungsnummer: WO 2012/143381

(56) Entgegenhaltungen:
- WO-A1-2004/113637
- WO-A2-2006/056046
- BE-A6- 1 015 214
- DE-U1-202007 008 611
- FR-A- 761 427
- FR-A1- 2 301 653
- NL-A- 9 300 520
- US-A- 3 283 464
- US-B1- 6 374 558
- US-B1- 6 397 550

## Beschreibung

Die vorliegende Erfindung betrifft ein Profilelement gemäß dem Oberbegriff des Anspruchs 1. Weiterhin ist die Erfindung auf ein Verfahren zum Herstellen eines solchen Profilelements gerichtet.

Profilelemente dieser Art werden beispielsweise als C-förmige Ständerprofile für den Trockenbau verwendet, können aber auch als sonstige Leichtbauprofilelemente ausgebildet sein. In vielen Fällen müssen die Profilelemente einerseits eine vorgegebene Steifigkeit besitzen andererseits jedoch ein möglichst geringes Gewicht aufweisen. Zur Gewichtsreduktion werden oftmals Öffnungen in dem Profilelement erzeugt, beispielsweise ausgestanzt, was jedoch den Nachteil hat, dass die ausgestanzten Stücke Abfallstücke darstellen. Zum einen ergibt sich hierbei das Problem der Entsorgung und zum anderen werden die Kosten für die Herstellung durch den zusätzlichen Stanzvorgang erhöht. Da darüber hinaus die Kosten solcher Profilelemente oftmals im Wesentlichen von den Materialkosten bestimmt sind, sind die Abfallstücke beim Erzeugen der Löcher unerwünscht.

Aus der DE 20 2007 008 611 U1 und der US 6,374,558 B1 ist jeweils ein Profilelement gemäß dem Oberbegriff des Anspruchs 1 bekannt.

Es ist eine Aufgabe der vorliegenden Erfindung, ein Profilelement der eingangs genannten Art anzugeben, das einfach und kostengünstig und mit verringertem Materialaufwand herstellbar ist sowie eine erhöhte Steifigkeit besitzt. Weiterhin soll ein Verfahren zum Herstellen eines solchen Profilelements angegeben werden.

Gelöst wird diese Aufgabe erfindungsgemäß durch ein Profilelement nach Anspruch 1.

Ein erfindungsgemäßes Verfahren ist in Anspruch 14 bzw. 15 beschrieben.

Erfindungsgemäß wird somit eine Gewichtsreduktion des Profilelements erreicht, indem gegenüber einer vollflächigen Ausbildung das Profilelement zwei mäanderförmige Längskanten umfasst, so dass das Gewicht des Profilelements gegenüber einer vollflächigen Ausbildung reduziert ist. Durch die Verbindung der beiden Längsabschnitte über ihre jeweils geradlinige, der jeweiligen mäanderförmigen Längskante gegenüberliegende Längskante oder durch eine entsprechend einstückige Ausbildung der beiden Längsabschnitte wird ein relativ großflächiger Bereich in der Mitte des Profilelements erzeugt, der eine hohe Steifigkeit besitzt, während die mäanderförmigen Längskanten jeweils die Außenkanten des Profilelements bilden, an denen bei vielen Anwendungen keine entsprechende Steifigkeit erforderlich ist. Des Weiteren ist eine solche Ausbildung oftmals auch aus optischen Gründen vorteilhaft, da der Mittelbereich des Profilelements auf diese Weise als geschlossene Fläche ausgebildet ist. Insbesondere wenn die Randbereiche beispielsweise durch eine weitere Bearbeitung verformt, beispielsweise umgebogen werden und dadurch von außen nicht mehr sichtbar sind, wird ein vollflächiger Eindruck des Profilelements erweckt, obwohl durch die mäanderförmigen Längskanten Material eingespart werden kann. Es kann somit eine einseitig offene und/oder gelochte Struktur erzeugt werden.

Durch die doppelwandige Erzeugung der Profilschenkel des erfindungsgemäßen Profilelements wird ein besonders steifes Profil mit U- oder Vförmigem Querschnitt erzeugt, wobei durch den Verlauf der mäanderförmigen Längskanten zumindest bereichsweise in den Innenwänden der doppelwandigen Profilschenkel trotz der Erhöhung der Steifigkeit die gewünschte Gewichtsreduktion des Profilelements erreicht wird.

Nach einer vorteilhaften Ausführungsform des erfindungsgemäßen Verfahrens wird in ein lang gestrecktes streifenförmiges Ausgangsmaterial zumindest ein sich in Längserstreckung des Ausgangsmaterials erstreckender mäanderförmiger Schlitz eingebracht, durch den das Ausgangsmaterial in die zwei separaten Längsabschnitte geteilt wird. Durch die Erzeugung der beiden Längsabschnitte auf diese Weise entsteht kein Abfallmaterial, das die Herstellungskosten erhöhen würde. Dabei ist es sowohl möglich, dass die aus dem ursprünglich einheitlichen Ausgangsmaterial erzeugten beiden Längsabschnitte zur Erzeugung des gleichen Profilelements über ihre geradlinigen Längskanten miteinander verbunden werden als auch dass zwei Längsabschnitte, die in entsprechender Weise aus unterschiedlichem Ausgangsmaterial erzeugt wurden, miteinander zu dem erfindungsgemäßen Profilelement verbunden werden. In beiden Fällen werden sowohl die Erzeugung des Abfallmaterials vermieden als auch die oben genannten weiteren Vorteile erreicht.

Nach einer vorteilhaften Ausführungsform der Erfindung sind die geradlinigen Längskanten direkt oder zumindest über ein Zwischenelement miteinander verbunden. Beispielsweise können die geradlinigen Längskanten miteinander oder gegebenenfalls mit dem Zwischenelement durch Verschweißen, Verklemmen, Verquetschen, Verpressen, Verschrauben, Verkleben, Vernieten, Falzen oder durch ein Druckfügeverfahren wie Verclinchen oder Vercrimpen verbunden sein. Vorteilhaft kann das Zwischenelement dabei als lang gestrecktes, streifenförmiges Element ausgebildet sein. Insbesondere kann das Zwischenelement auch eine Dicke besitzen, die gleich groß ist wie die Dicke der Längsabschnitte.

Nach einer weiteren bevorzugten Ausführungsform sind die mäanderförmigen Längskanten der Längsabschnitte komplementär zueinander ausgebildet. Dies ergibt sich beispielsweise automatisch, wenn die Längsabschnitte aus dem gleichen Ausgangsmaterial hergestellt werden, indem ein mäanderförmiger Längsschnitt zur Aufteilung des Ausgangsmaterials in die zwei Längsabschnitte eingebracht wird.

Bevorzugt bestehen die Längsabschnitte aus demselben Material. Auch dies ergibt sich automatisch, wenn die beiden Längsabschnitte aus dem gleichen Ausgangsmaterial hergestellt werden. In diesem Fall bilden die Längsabschnitte zwei entlang der mäanderförmigen Längskanten zusammenhängende Abschnitte eines ursprünglich einheitlichen Materialstreifens.

Vorteilhaft ist der Profilkörper als dünnwandig kalt verformter Profilkörper ausgebildet. Es handelt sich bei den erfindungsgemäßen Profilelementen somit um Leichtbauprofile, die in unterschiedlicher Weise eingesetzt werden können. Beispielsweise sind neben den eingangs genannten Verwendungen auch Anwendungen im Kfz-Bereich, im Schaltschrankbau, bei Deckensystemen oder sogar als Rebenstützen, Weinpfosten oder im Bereich von Leitplanken denkbar. Dabei können vorteilhaft die Längsabschnitte eine Dicke von ca. zwischen 0,5 mm und 3 mm besitzen.

Nach einer weiteren vorteilhaften Ausführungsform der Erfindung verlaufen die geradlinigen Längskanten im Wesentlichen parallel zur Längserstreckung der Längsabschnitte. Grundsätzlich ist auch ein schräger Verlauf denkbar, solange die Längsabschnitte miteinander verbunden werden können.

Nach einer weiteren vorteilhaften Ausführungsform der Erfindung sind die mäanderförmigen Längskanten direkt oder über zumindest ein weiteres Zwischenelement miteinander verbunden. Auf diese Weise kann beispielsweise ein geschlossenes Profil erzeugt werden. Bevorzugt können dabei die mäanderförmigen Längskanten zumindest bereichsweise miteinander oder gegebenenfalls mit dem weiteren Zwischenelement durch Verschweißen, Verklemmen, Verquetschen, Verpressen, Verschrauben, Verkleben, Vernieten, Falzen oder durch ein Druckfügeverfahren wie Verclinchen oder Vercrimpen verbunden sein.

Gemäß der Erfindung sind die mäanderförmigen Längskanten zumindest bereichsweise mit zwischen den mäanderförmigen Längskanten liegenden Abschnitten des Profilkörpers verbunden. Bevorzugt können die Abschnitte dabei im Wesentlichen im Bereich einer Längsmittelachse des Profilkörpers liegen. Es ist aber auch möglich, dass die Abschnitte außerhalb der Längsmittelachse liegen. Insbesondere können die Abschnitte beispielsweise jeweils im der jeweiligen mäanderförmigen Längskante zugewandten Randbereich des Profilkörpers liegen. Die von den mäanderförmigen Längskanten berandeten Bereiche der Längsabschnitte können auf diese Weise Abstützelemente bilden, die sich beispielsweise an der Rückseite des Profilelements in dessen Mittelbereich oder in dessen Randbereichen abstützen. Dadurch kann die Steifigkeit eines entsprechenden Profilelements erhöht werden.

Vorteilhaft verlaufen im Falle einer separaten Ausbildung der Längsabschnitte die miteinander verbundenen geradlinigen Längskanten durch die Abschnitte hindurch.

Insbesondere können die Abschnitte als flächige Abschnitte ausgebildet sein und mit von den mäanderförmigen Längskanten berandeten Verbindungsbereichen der Längsabschnitte verbunden sein. Durch die flächige Verbindung werden eine weitere Erhöhung der Steifigkeit sowie eine festere Verbindung der Verbindungsbereiche mit dem restlichen Bereich des Profilelements erzielt. Die Verbindung kann dabei beispielsweise als Schweiß- oder Klebeverbindung ausgebildet sein. Es sind aber auch andere Verbindungsarten wie z.B. eine Steckverbindung, eine Stanzverbindung, eine Verbindung durch ein Druckfügeverfahren, wie z. B. Verclinchen oder Vercrimpen, oder eine Vernietung oder Verschraubung möglich.

Gemäß der Erfindung besitzt der Profilkörper einen im Wesentlichen U- oder V-förmigen Querschnitt mit zwei Profilschenkeln und einem die Profilschenkel verbindenden Profilsteg, wobei die Profilschenkel jeweils durch die mäanderförmigen Längskanten umfassende, umgebogene Bereiche der Längsabschnitte gebildet sind. Dabei sind die Profilschenkel zumindest bereichsweise doppelwandig mit einer Außenwand und einer zum Inneren des U- oder V-förmigen Querschnitts hin liegenden Innenwand ausgebildet und die mäanderförmige Längskante verlaufen jeweils zumindest bereichsweise in der Innenwand des doppelwandigen Profilschenkels. Dadurch wird ein besonders steifes Profil mit U- oder V-förmigem Querschnitt erreicht.

Vorteilhaft ist zwischen den Wänden des doppellagigen Profilschenkels jeweils ein sich in Längsrichtung des Profilschenkels erstreckender Hohlraum ausgebildet. Dadurch ist eine weitere Erhöhung der Steifigkeit bei gleichzeitiger Materialverringerung und verringertem Gewicht gegenüber einem Vollprofil gewährleistet.

Nach einer weiteren bevorzugten Ausführungsform der Erfindung sind die miteinander verbundenen geradlinigen Längskanten der Längsabschnitte insbesondere mittig innerhalb des Profilstegs angeordnet. Auf diese Weise wird ein symmetrischer Aufbau des Profilelements erreicht, durch den auch die Steifigkeit weiter erhöht wird.

Ein erfindungsgemäßes Profilelement kann vorteilhaft als Kraftabsorber, insbesondere als Stoßstange, beispielsweise eines Kraftfahrzeugs oder eines sonstigen Fahrzeugs, verwendet werden. Aufgrund der erfindungsgemäßen Ausbildung kann eine Gewichtsreduktion gegenüber einer vollflächigen Ausbildung eines Profilelements bei annähernd gleicher Steifigkeit erreicht werden. Auch kann ein erfindungsgemäßes Profilelement vorteilhaft als Ersatz für ein C-Ständerprofil verwendet werden.

Weitere vorteilhafte Ausführungsformen sind in den Unteransprüchen angegeben.

Die Erfindung wird nachfolgend anhand von Ausführungsbeispielen unter Bezugnahme auf die Figuren näher beschrieben; in diesen zeigt:
- Fig. 1: einen Materialabschnitt mit einem Schnittmuster zum Erzeugen eines erfindungsgemäß ausgebildeten Profilelements,
- Fig. 2: ein erfindungsgemäß ausgebildetes Profilelement in einem Zwischenschritt der Herstellung,
- Fig. 3 a) und b): je eine Teilansicht eines erfindungsgemäß ausgebildeten Profilelements in perspektivischer Darstellung einmal mit und einmal ohne dargestellte verdeckte Kanten,
- Fig. 4 a) und b): das Profilelement nach Fig. 3 in je einer anderen Teilansicht einmal mit und einmal ohne dargestellte verdeckte Kanten,
- Fig. 5: ein weiteres Profilelement, das nicht gemäß der Erfindung hergestellt ist,
- Fig. 6: eine Stoßstange mit einem erfindungsgemäß ausgebildeten Profilelement und
- Fig. 7: ein weiteres erfindungsgemäß ausgebildetes Profilelement.

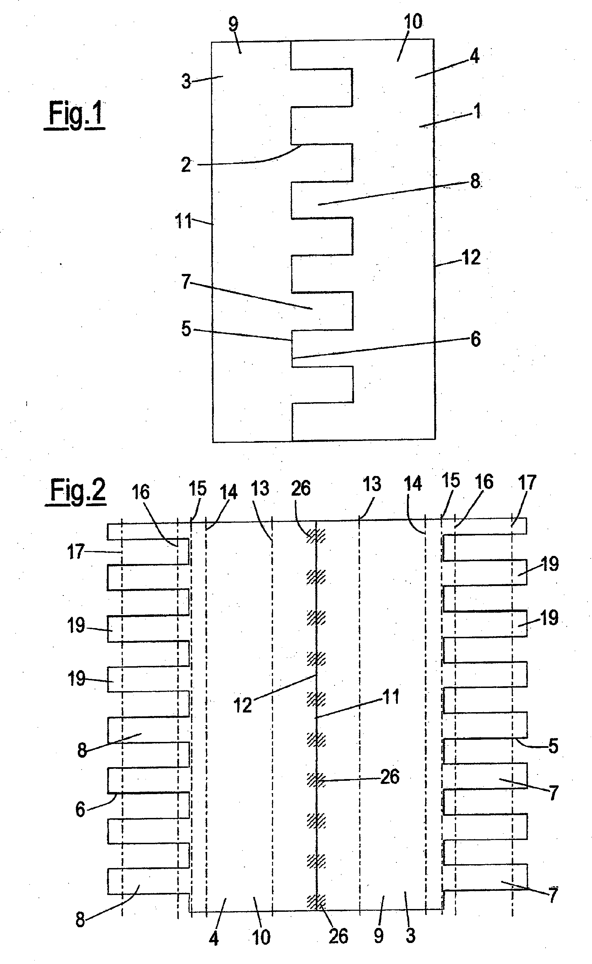

Fig. 1 zeigt einen Materialstreifen 1, beispielsweise einen Blechstreifen, der als Ausgangsmaterial für ein erfindungsgemäßes Profilelement dient. In dem Materialstreifen 1 ist ein sich in Längserstreckung des Materialstreifens 1 verlaufender mäanderförmiger Schlitz 2 ausgebildet, durch den der Materialstreifen 1 in zwei separate Längsabschnitte 3, 4 aufgeteilt ist. Durch den mäanderförmigen Schlitz 2 erhalten die Längsabschnitt 3, 4 jeweils eine mäanderförmige Längskante 5, 6, die in der Darstellung gemäß Fig. 1 nahtlos aneinander anliegen. Die mäanderförmigen Längskanten 5, 6 umfassen jeweils in Längsrichtung verlaufende sowie senkrecht dazu verlaufende Kantenabschnitte. Auch andere mäanderförmige Verläufe der Längskanten, beispielsweise mit schräg verlaufenden, gekrümmten oder ineinander verschlungenen Kantenabschnitten, sind im Rahmen dieser Erfindung verwendbar.

Durch die mäanderförmigen Längskanten 5, 6 werden jeweils stegförmige Verbindungsbereiche 7, 8 der Längsabschnitte 3, 4 gebildet, die jeweils mit lang gestreckten Abschnitten 9, 10 der Längsabschnitte 3, 4 einstückig verbunden sind und seitlich über diese hinausragen. Wie weiterhin aus Fig. 1 zu erkennen ist, sind die stegförmigen Verbindungsbereiche 7 von der mäanderförmigen Längskante 5 und die stegförmigen Verbindungsbereiche 8 von der mäanderförmigen Längskante 6 berandet.

Der Längsabschnitt 3 umfasst eine der mäanderförmigen Längskante 5 gegenüberliegende geradlinige Längskante 11, die gleichzeitig eine erste Außenkante des Materialstreifens 1 bildet. In entsprechender Weise umfasst der Längsabschnitt 4 eine der mäanderförmigen Längskante 6 gegenüberliegende geradlinige Längskante 12, die die zweite Außenkante des Materialstreifens 1 bildet.

Zur Erzeugung des erfindungsgemäßen Profilelements wird der Materialstreifen 1 durch Einbringen des mäanderförmigen Schlitzes 2, beispielsweise durch ein Laserschneidverfahren, ein Rotationsschneidverfahren oder ein sonstigen geeignetes Schneidverfahren, in die beiden Längsabschnitte 3, 4 aufgeteilt und anschließend werden die beiden Längsabschnitte 3, 4 so angeordnet, dass sie mit ihren geradlinigen Längskanten 11, 12 aneinander liegen, wie es in Fig. 2 dargestellt ist. In dieser Position werden die beiden Längsabschnitte 3, 4 entlang der aneinander liegenden geradlinigen Längskanten 11, 12 miteinander verbunden, beispielsweise miteinander verschweißt, insbesondere laserverschweißt. Auch eine überlappende Verbindung ist dabei möglich.

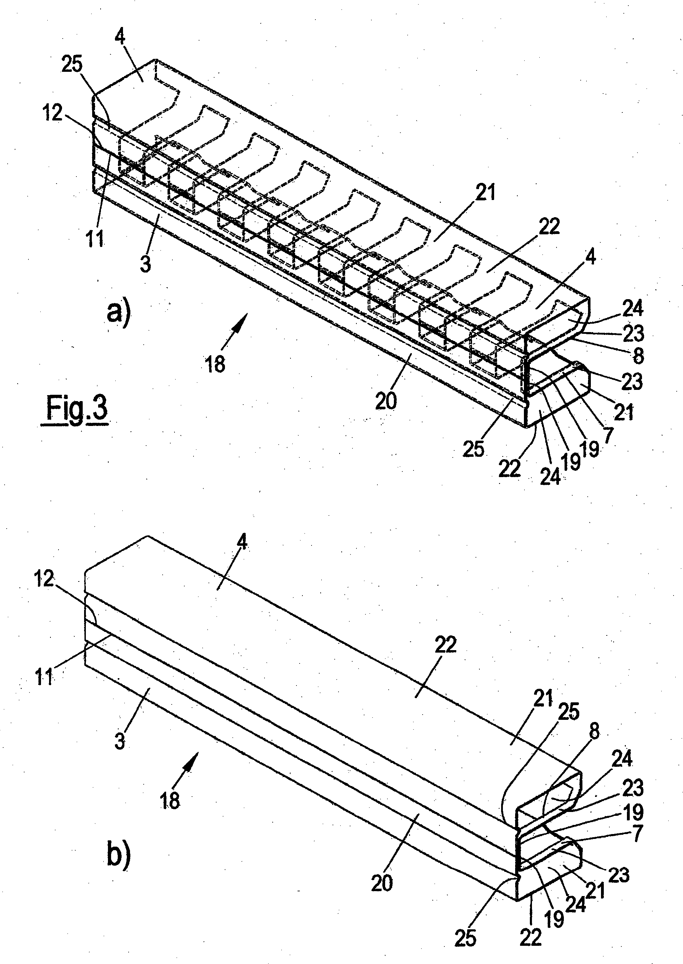

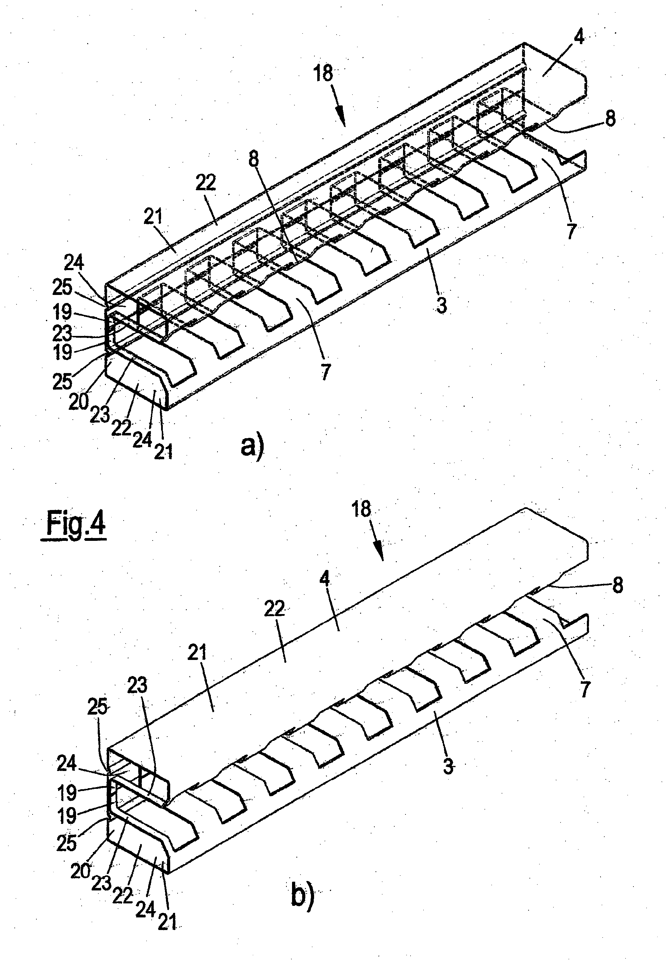

Anschließend werden die Längsabschnitte 3, 4 entlang von durch gestrichelte Linien dargestellten, sich in Längsrichtung der Längsabschnitte 3, 4 erstreckenden Biegelinien 13 bis 17 jeweils umgebogen, bis ein Profilkörper 18 des Profilelements entsteht, der einen U-förmigen Querschnitt aufweist, wie er in den Fig. 3 und 4 dargestellt ist. Die Längsabschnitte 3, 4 werden dabei entlang der Biegelinien 13, 14 jeweils um 90° in gleicher Richtung umgebogen, während entlang der Biegelinien 15 und 16 jeweils in gleicher Richtung eine Umbiegung um nur ca. 45° erfolgt. Um die Biegelinie 17 werden die beiden Längsabschnitte 3, 4 letztlich in entgegengesetzter Richtung um 90° umgebogen, so dass Endabschnitte 19 der stegförmigen Verbindungsabschnitte 7, 8 flächig an der Rückseite des mittleren Bereichs des Profilkörpers 18 zur Anlage kommen.

Dieser mittlere Bereich bildet einen Profilsteg 20 des Profilkörpers 18, an den sich seitlich jeweils im Wesentlichen symmetrisch ausgebildete Profilschenkel 21 anschließen.

Die Profilschenkel 21 sind doppelwandig ausgebildet, wobei jeweils die außen liegende Außenwand 22 durch die zwischen den Biegelinien 13, 14 liegenden Bereiche der Längsabschnitte 3, 4 und die zum Inneren des U-förmigen Querschnitts hin liegende Innenwand 23 durch die umgebogenen Verbindungsbereiche 7, 8 gebildet werden.

Zwischen den Außen- und Innenwänden 22, 23 ist jeweils ein sich in Längsrichtung der Profilschenkel 21 erstreckender Hohlraum 24 ausgebildet, der sich über die gesamte Länge des Profilkörpers 18 erstreckt.

Die Endabschnitte 19 der Verbindungsbereiche 7, 8 sind mit dem Profilsteg 20 verbunden, insbesondere verschweißt, so dass eine hohe Steifigkeit des gesamten Profilkörpers 18 erreicht wird.

Aus Fig. 3 ist weiterhin zu erkennen, dass in dem Profilsteg 20 zwei sich in Längserstreckung verlaufende Versteifungssicken 25 ausgebildet sind, die die Steifigkeit des Profilkörpers 18 zusätzlich erhöhen. Dabei sind die umgebogenen Endabschnitte 19 der Verbindungsbereiche 7, 8 zwischen den Versteifungssicken 25 angeordnet und somit mit Abschnitten 26 (Fig. 2) des Profilkörpers 18 verbunden, die, bezogen auf die Darstellung nach Fig. 2, mittig zwischen den außen liegenden mäanderförmigen Längskanten 5, 6 angeordnet sind. Wie weiterhin aus Fig. 2 zu erkennen ist, verlaufen die miteinander verbundenen geradlinigen Längskanten 11, 12 durch die Abschnitte 26 hindurch. Grundsätzlich können die Abschnitte 26 auch außermittig angeordnet sein, so dass z.B. zwischen den jeweils einander gegenüberliegenden Endabschnitten 19 der jeweiligen Verbindungsbereiche 7, 8 ein mehr oder weniger großer Abstand besteht. Dadurch können auch Profilelemente mit breiterem Profilsteg 20 gebildet werden.

Die Biegelinien 13 bis 17 müssen nicht exakt wie beschrieben angeordnet sein, sondern können je nach Bedarf in größeren oder kleineren Abständen voneinander angeordnet sein. Darüber hinaus können insbesondere die Biegelinien 15, 16 auch durch eine einzige Biegelinie ersetzt werden, um die bevorzugt um 90° eine Umbiegung erfolgt, so dass letztlich wiederum ein U-förmiger Querschnitt des Profilkörpers 18 erzeugt wird. Die Innenwände 22, 23 können auch schräg verlaufend ausgebildet sein, so dass der Profilkörper 18 einen V-förmigen Querschnitt besitzt.

Grundsätzlich ist es auch möglich, dass die Verbindungsbereiche 7, 8 direkt mit ihren außen liegenden Bereichen der mäanderförmigen Längskanten 5, 6 an dem Profilsteg 20 befestigt, beispielsweise verschweißt sind, so dass eine Stoßkante-auf-Fläche-Verbindung ohne umgebogene Endabschnitte 19 realisiert wird. Auch sonstige Verbindungsarten wie beispielsweise eine Steckverbindung mit Schlitzen und Laschen oder eine Verbindung durch ein Druckfügeverfahren sind möglich.

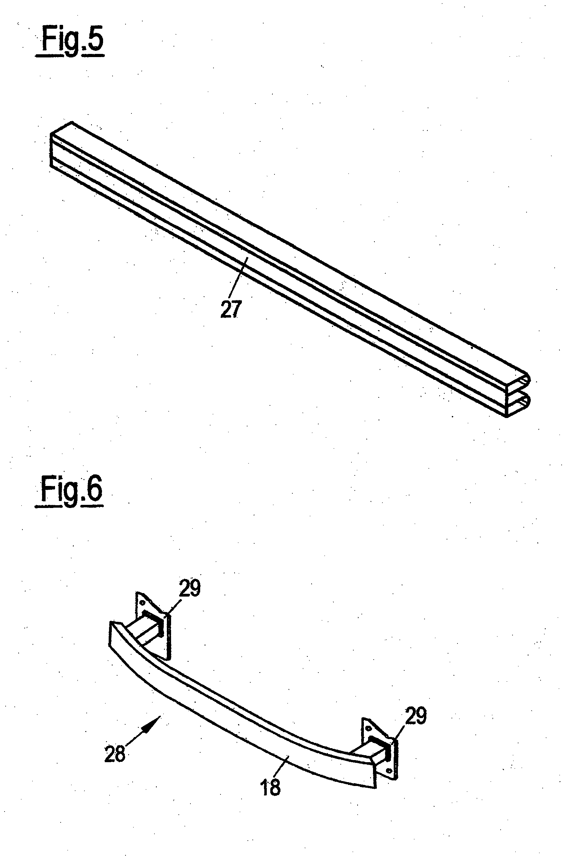

Das Profilelement gemäß den Fig. 3 und 4 kann beispielsweise anstelle eines C-Ständerprofils verwendet werden. Es sind auch weitere Verwendungen, insbesondere auch als Kraftabsorber gemäß Fig. 6, möglich.

Fig. 5 zeigt einen Profilkörper 27, der nicht gemäß der Erfindung, sondern aus einem einheitlichen, vollflächigen Materialstreifen ohne mäanderförmige Längskanten und damit ohne Öffnungen durch entsprechendes Umbiegen gebildet wurde. Gegenüber dem erfindungsgemäßen Profilkörper 18 ist der Profilkörper 27 zum einen schwerer ausgebildet und zum anderen ist zur Erzeugung des Profilkörpers 27 ein höherer Materialaufwand erforderlich.

In Fig. 6 ist eine als Kraftabsorber ausgebildete Stoßstange 28 dargestellt, die ein erfindungsgemäß ausgebildetes Profilelement mit einem Profilkörper 18 umfasst. An den beiden seitlichen, leicht gebogenen Enden des Profilkörpers 18 sind Befestigungselemente 29 ausgebildet, über die die Stoßstange 28 in üblicher Weise beispielsweise an einem Kraftfahrzeug befestigt werden kann.

Trotz des geringen Materialverbrauchs besitzt das erfindungsgemäß ausgebildete Profilelement die erforderliche Steifigkeit, da die von den mäanderförmige Längskanten 5, 6 berandeten Verbindungsbereiche 7, 8 Abstützelemente bilden, die die bei einem Unfall üblicherweise von vorne auf die Stoßstange 28 auftretenden Kräfte zuverlässig aufnehmen.

Während bisher beschrieben wurde, dass die Längsabschnitte 3, 4 jeweils separat ausgebildet sind und über ihre geradlinigen Längskanten 11, 12 miteinander verbunden werden, können in allen beschriebenen Ausführungsformen die Längsabschnitte 3, 4 auch einstückig miteinander ausgebildet sein. Die in den Figuren darstellten Linien der Längskanten 11, 12 stellen in diesem Fall keine Längskanten, sondern nur die gedachte Mittellinie der einstückig miteinander ausgebildeten Längsabschnitte 3, 4 dar.

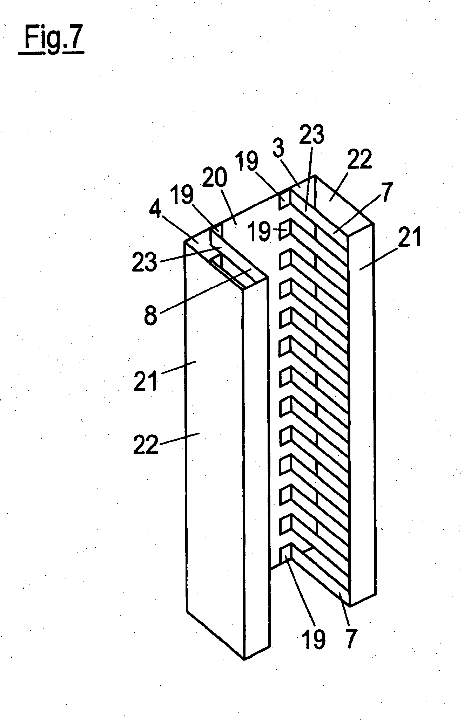

Dementsprechend ist in Fig. 7 ein erfindungsgemäßes Profilelement dargestellt, das beispielsweise ein C-Ständerprofil ersetzen kann. Dabei sind gleiche oder ähnliche Elemente mit den gleichen Bezugszeichen wie zu den zuvor beschriebenen Ausführungsformen bezeichnet. Das dargestellte Profilelement ist ähnlich dem Profilelement aus den Fig. 3 und 4 ausgebildet, wobei die Längsabschnitte 3, 4 jedoch miteinander einstückig ausgebildet sind. Darüber hinaus ist der Profilsteg 20 breiter als in den Fig. 3 und 4 ausgebildet, so dass zwischen den einander jeweils gegenüber liegenden Endabschnitten 19 der Verbindungsbereich 7, 8 ein größerer Abstand besteht, so dass bei Bedarf in dem Profilsteg 20 Öffnungen und/oder Versteifungssicken ausgebildet werden können. Auch in den Profilschenkeln 21 können zusätzliche Versteifungssicken vorgesehen sein. Dies gilt auch für die zuvor beschriebenen Ausführungsformen. Grundsätzlich kann das Profilelement nach Fig. 7 auch separat ausgebildete Längsabschnitte 3, 4 aufweisen.

### Bezugszeichenliste

- 1: Materialstreifen
- 2: mäanderförmiger Schlitz
- 3: Längsabschnitt
- 4: Längsabschnitt
- 5: mäanderförmige Längskante
- 6: mäanderförmige Längskante
- 7: Verbindungsbereiche
- 8: Verbindungsbereiche
- 9: lang gestreckter Abschnitt
- 10: lang gestreckter Abschnitt
- 11: geradlinige Längskante
- 12: geradlinige Längskante
- 13: Biegelinie
- 14: Biegelinie
- 15: Biegelinie
- 16: Biegelinie
- 17: Biegelinie
- 18: Profilkörper
- 19: Endabschnitte
- 20: Profilsteg
- 21: Profilschenkel
- 22: Außenwände
- 23: Innenwände
- 24: Hohlräume
- 25: Versteifungssicken
- 26: Abschnitte
- 27: Profilkörper
- 28: Stoßstange
- 29: Befestigungselemente

## Patentansprüche

1. Profilelement, insbesondere Bauprofil, beispielsweise Trockenbau-, Fassaden-, Putz-, Sockel-, Estrich-, Fliesen- oder Kabelträgerprofil, Versteifungsprofil, insbesondere KFZ-Profil, oder Regal- oder Entwässerungsschiene, mit einem insbesondere aus Metall oder Kunststoff bestehenden lang gestreckten Profilkörper (18), der zumindest zwei Längsabschnitte (3, 4) umfasst, wobei jeder Längsabschnitt (3, 4) eine mäanderförmige Längskante (5, 6) aufweist, wobei der Profilkörper (18) einen im Wesentlichen U- oder V-förmigen Querschnitt mit zwei Profilschenkeln (21) und einem die Profilschenkel (21) verbindenden Profilsteg (20) besitzt, wobei die Profilschenkel (21) durch die mäanderförmigen Längskanten (5, 6) umfassende umgebogenen Bereiche der Längsabschnitte (3, 4) gebildet sind und die jeweiligen Profilschenkel (21) zumindest bereichsweise doppelwandig mit einer Außenwand (22) und einer zum Inneren des U- oder V-förmigen Querschnitts hin liegenden Innenwand (23) ausgebildet sind und die mäanderförmigen Längskanten (5, 6) zumindest bereichsweise in den Innenwänden (23) der doppelwandigen Profilschenkel (21) verlaufen,
**dadurch gekennzeichnet,**
**dass** die mäanderförmigen Längskanten (5, 6) zumindest bereichsweise mit zwischen den mäanderförmigen Längskanten (5, 6) liegenden Abschnitten (26) des Profilkörpers (18) verbunden sind.

2. Profilelement nach Anspruch 1,
**dadurch gekennzeichnet,**
**dass** die Abschnitte (26) im Wesentlichen im Bereich einer Längsmittelachse des Profilkörpers (18) liegen.

3. Profilelement nach Anspruch 1 oder 2,
**dadurch gekennzeichnet,**
**dass** die Abschnitte (26) als flächige Abschnitte ausgebildet sind und mit von den mäanderförmigen Längskanten (5, 6) berandeten Verbindungsbereichen (7, 8) der Längsabschnitte (3, 4) verbunden sind.

4. Profilelement nach zumindest einem der vorhergehenden Ansprüche,
**dadurch gekennzeichnet,**
**dass** die mäanderförmigen Längskanten (5, 6) direkt oder über zumindest ein Zwischenelement miteinander verbunden sind und insbesondere dass die mäanderförmigen Längskanten (5, 6) zumindest bereichsweise miteinander oder ggf. mit dem Zwischenelement durch Verschweißen, Verklemmen, Verquetschen, Verpressen, Verschrauben, Verkleben, Vernieten, Falzen oder durch ein Druckfügeverfahren wie Verclinchen oder Vercrimpen verbunden sind.

5. Profilelement nach zumindest einem der vorhergehenden Ansprüche,
**dadurch gekennzeichnet,**
**dass** die Längsabschnitte (3, 4) einstückig miteinander ausgebildet sind.

6. Profilelement nach zumindest einem der vorhergehenden Ansprüche,
**dadurch gekennzeichnet,**
**dass** die Längsabschnitte (3, 4) separat ausgebildet und miteinander verbunden sind.

7. Profilelement nach Anspruch 6,
**dadurch gekennzeichnet,**
**dass** jeder Längsabschnitt (3, 4) eine seiner mäanderförmigen Längskante (5, 6) gegenüberliegende geradlinige Längskante (11, 12) umfasst und die Längsabschnitte (3, 4) über die geradlinigen Längskanten (11, 12) direkt oder über zumindest ein Zwischenelement miteinander verbunden sind.

8. Profilelement nach Anspruch 7,
**dadurch gekennzeichnet,**
**dass** die miteinander verbundenen geradlinigen Längskanten (11, 12) durch die Abschnitte (26) hindurch verlaufen und/oder
**dass** die geradlinigen Längskanten (11, 12) im Wesentlichen parallel zur Längserstreckung der Längsabschnitte (3, 4) verlaufen und/oder
**dass** die miteinander verbundenen geradlinigen Längskanten (11, 12) der Längsabschnitte (3, 4) insbesondere mittig innerhalb des Profilstegs (20) angeordnet sind
und/oder
**dass** die geradlinigen Längskanten (11, 12) miteinander oder ggf. mit dem Zwischenelement durch Verschweißen, Verklemmen, Verquetschen, Verpressen, Verschrauben, Verkleben, Vernieten, Falzen oder durch ein Druckfügeverfahren wie Verclinchen oder Vercrimpen verbunden sind.

9. Profilelement nach zumindest einem der Ansprüche 6 bis 8,
**dadurch gekennzeichnet,**
**dass** die Längsabschnitte (3, 4) zwei entlang der mäanderförmigen Längskanten (5, 6) zusammenhängende Abschnitte eines ursprünglich einheitlichen Materialstreifens (1) bilden.

10. Profilelement nach zumindest einem der vorhergehenden Ansprüche,
**dadurch gekennzeichnet,**
**dass** die mäanderförmigen Längskanten (5, 6) der Längsabschnitte (3, 4) komplementär zueinander ausgebildet sind und/oder
**dass** die Längsabschnitte (3, 4) aus demselben Material bestehen.

11. Profilelement nach zumindest einem der vorhergehenden Ansprüche,
**dadurch gekennzeichnet,**
**dass** der Profilkörper (18) als dünnwandig kaltverformter Profilkörper ausgebildet ist
und/oder
**dass** die Längsabschnitte (3, 4) eine Dicke von ca. zwischen 0,5 mm und 3 mm besitzen.

12. Profilelement nach zumindest einem der vorhergehenden Ansprüche,
**dadurch gekennzeichnet,**
**dass** zwischen den Wänden (22, 23) des doppellagigen Profilschenkels (21) jeweils ein sich in Längsrichtung des Profilschenkels (21) erstreckender Hohlraum (24) ausgebildet ist.

13. Kraftabsorber, insbesondere Stoßstange, mit einem Profilelement nach zumindest einem der vorgehenden Ansprüche.

14. Verfahren zum Herstellen eines Profilelements nach zumindest einem der Ansprüche 1 bis 12,
**dadurch gekennzeichnet,**
**dass** zur Erzeugung des Profilelements ein lang gestrecktes streifenförmiges Ausgangsmaterial (1) mit je zwei außen liegenden mäanderförmigen Längskanten (5, 6) bereitgestellt wird und dass von den mäanderförmigen Längskanten (5, 6) berandete Längsabschnitte (3, 4) des Materialstreifens zur Erzeugung der Profilschenkel (21) umgebogen werden, bis die mäanderförmigen Längskanten (5, 6) zumindest bereichsweise mit zwischen den mäanderförmigen Längskanten (5, 6) liegenden Abschnitten (26) des Profilkörpers (18) in Kontakt gelangen, woraufhin sie mit diesen verbunden werden.

15. Verfahren zum Herstellen eines Profilelements nach einem der Ansprüche 1 bis 12
**dadurch gekennzeichnet,**
**dass** zur Erzeugung des Profilelements zwei separate Längsabschnitte (3, 4) mit je einer mäanderförmigen Längskante (5, 6) und je einer der mäanderförmigen Längskanten (5, 6) gegenüberliegenden geradlinigen Längskante (11, 12) bereitgestellt werden und dass die Längsabschnitte (3, 4) über die geradlinigen Längskanten (11, 12) miteinander verbunden werden und insbesondere dass in ein lang gestrecktes streifenförmiges Ausgangsmaterial (1) zumindest ein sich in Längserstreckung des Ausgangsmaterials (1) erstreckender mäanderförmiger Schlitz (2) eingebracht wird, durch den das Ausgangsmaterial (1) in die zwei separaten Längsabschnitte (3, 4) geteilt wird.

## Claims

1. A section element, in particular a construction element, for example a dry construction section, a facade section, a plaster section, a skirting section, a screed section, a tile section or a cable carrier section, a stiffening section, in particular an automotive section, or a shelf rail or a drainage rail, having an elongated section body (18) which in particular comprises metal or plastic, which comprises at least two longitudinal portions (3, 4), wherein each longitudinal portion (3, 4) has a meandering longitudinal edge (5, 6), wherein the section body (18) has a substantially U-shaped or V-shaped cross-section having two section limbs (21) and a section web (20) connecting the section limbs (21); wherein the section limbs (21) are formed by bent over regions of the longitudinal portions (3, 4) comprising the meandering longitudinal edges (5, 6) and the respective section limbs (21) are formed at least regionally double-walled having an outer wall (22) and an inner wall (23) disposed toward the interior of the U-shaped or V-shaped cross-section and the meandering longitudinal edges (5, 6) extends at least regionally in the inner walls (23) of the double-walled section limbs (21),
**characterized in that**
the meandering longitudinal edges (5, 6) are connected at least regionally to the portions (26) of the section body (18) disposed between the meandering longitudinal edges (5, 6).

2. A section element in accordance with claim 1,
**characterized in that**
the portions (26) lie substantially in the region of a longitudinal central axis of the section body (18).

3. A section element in accordance with claim 1 or claim 2,
**characterized in that**
the portions (26) are formed as areal portions and are connected to connection regions (7, 8) of the longitudinal portions (3, 4) bounded by the meandering longitudinal edges (5, 6).

4. A section element in accordance with at least one of the preceding claims,
**characterized in that**
the meandering longitudinal edges (5, 6) are connected to one another directly or via at least one intermediate element; and in particular **in that** the meandering longitudinal edges (5, 6) are connected to one another at least regionally or optionally to the further intermediate element by welding, clamping, crushing, pressing, screwing, adhesive bonding, riveting, rebating or by a pressure joining process such as clinching or crimping.

5. A section element in accordance with at least one of the preceding claims,
**characterized in that**
the longitudinal portions (3, 4) are formed in one piece with one another.

6. A section element in accordance with at least one of the preceding claims,
**characterized in that**
the longitudinal portions (3, 4) are formed separately and are connected to one another.

7. A section element in accordance with claim 6,
**characterized in that**
each longitudinal portion (3, 4) comprises a straight-line longitudinal edge (11, 12) disposed opposite its meandering longitudinal edge (5, 6) and the longitudinal portions (3, 4) are connected to one another directly via the straight-line longitudinal edges (11, 12) or via at least one intermediate element.

8. A section element in accordance with claim 7,
**characterized in that**
the straight-line longitudinal edges (11, 12) connected to one another extend through the portions (26);
and/or
**in that** the straight-line longitudinal edges (11, 12) extend substantially in parallel with the longitudinal extent of the longitudinal portions (3, 4);
and/or
**in that** the mutually connected straight-line longitudinal edges (11, 12) of the longitudinal portions (3, 4) are in particular arranged centrally within the section web (20);
and/or
**in that** the straight-line longitudinal edges (11, 12) are connected to one another or optionally to the intermediate element by welding, clamping, crushing, pressing, screwing, adhesive bonding, riveting, rebating or by a pressure joining process such as clinching or crimping.

9. A section element in accordance with at least one of the claims 6 to 8,
**characterized in that**
the longitudinal portions (3, 4) form two contiguous portions of an originally uniform material strip (1) along the meandering longitudinal edges (5, 6).

10. A section element in accordance with at least one of the preceding claims,
**characterized in that**
the meandering longitudinal edges (5, 6) of the longitudinal portions (3, 4) are made complementary to one another;
and/or
**in that** the longitudinal portions (3, 4) comprise the same material.

11. A section element in accordance with at least one of the preceding claims,
**characterized in that**
the section body (18) is made as a thin-walled, cold-formed section body;
and/or
**in that** the longitudinal portions (3, 4) have a thickness of approximately between 0.5 mm and 3 mm.

12. A section element in accordance with at least one of the preceding claims,
**characterized in that**
a respective hollow space (24) extending in the longitudinal direction of the section limb (21) is formed between the walls (22, 23) of the double-layer section limb (21).

13. A force absorber, in particular a bumper, having a section element in accordance with at least one of the preceding claims.

14. A method of manufacturing a section element in accordance with at least one of the claims 1 to 12,
**characterized in that**
an elongated strip-shaped starting material (1) having two respective outwardly disposed meandering longitudinal edges (5, 6) is provided for producing the section element; and **in that** longitudinal portions (3, 4) of the material strip bounded by the meandering longitudinal edges (5, 6) are bent over for producing the section limbs (21) until the meandering longitudinal edges (5, 6) come into contact at least regionally with portions (26) of the section body (18) disposed between the meandering longitudinal edges (5, 6), whereupon they are connected to them.

15. A method of manufacturing a section element in accordance with any one of the claims 1 to 12,
**characterized in that**
two separate longitudinal portions (3, 4) each having a meandering longitudinal edge (5, 6) and each having a straight-line longitudinal edge (11, 12) disposed opposite the meandering longitudinal edge (5, 6) are provided for producing the section element; and **in that** the longitudinal portions (3, 4) are connected to one another via the straight-line longitudinal edges (11, 12); and in particular **in that** at least one meandering slit (2) which extends in the longitudinal extent of the starting material (1) and by which the starting material (1) is divided into the two separate longitudinal portions (3, 4) is introduced into an elongated strip-shaped starting material (1).

## Revendications

1. Élément profilé, en particulier profilé de construction, comme par exemple profilé pour la construction posée à sec, profilé de façade, profilé de crépi, profilé de socle, profilé de ragréage, profilé pour carrelage ou profilé porte-câbles, profilé de rigidification, en particulier profilé pour la technique automobile, ou rail pour étagère ou pour assèchement, comprenant un corps de profilé étiré en longueur (18), en particulier en métal ou en matière plastique, qui comprend au moins deux tronçons longitudinaux (3, 4), chaque tronçon longitudinal (3, 4) comportant une arête longitudinale (5, 6) en forme de méandres, dans lequel le corps de profilé (18) possède une section transversale sensiblement en forme de U ou de V avec deux branches de profilé (21) et une âme de profilé (20) qui relie les branches de profilé (21), dans lequel les branches de profilé (21) sont formées par des régions rabattues, incluant les arêtes longitudinales (5, 6) en forme de méandres, des tronçons longitudinaux (3, 4) et les branches de profilé respectives (21) sont réalisées au moins localement à paroi double avec une paroi extérieure (22) et une paroi intérieure (23) disposée vers l'intérieur de la section transversale en forme de U ou de V, et les arêtes longitudinales (5, 6) en forme de méandres s'étendent au moins localement dans les parois intérieures (23) des branches de profilé (21) à paroi double,
**caractérisé en ce que**
les arêtes longitudinales (5, 6) en forme de méandres sont reliées au moins localement avec des tronçons (26), du corps de profilé (18), situés entre les arêtes longitudinales (5, 6) en forme de méandres.

2. Élément profilé selon la revendication 1,
**caractérisé en ce que** les tronçons (26) sont situés sensiblement dans la région d'un axe longitudinal médian du corps de profilé (18).

3. Élément profilé selon la revendication 1 ou 2,
**caractérisé en ce que** les tronçons (26) sont réalisés sous forme de tronçons surfaciques et sont reliés avec des zones de liaison (7, 8), des tronçons longitudinaux (3, 4), bordées par les arêtes longitudinales (5, 6) en forme de méandres.

4. Élément profilé selon l'une au moins des revendications précédentes, **caractérisé en ce que** les arêtes longitudinales (5, 6) en forme de méandres sont reliées l'une à l'autre soit directement soit via au moins un élément intermédiaire, et en particulier **en ce que** les arêtes longitudinales (5, 6) en forme de méandres sont reliées au moins localement l'une à l'autre ou le cas échéant avec l'élément intermédiaire par soudage, par coincement, par écrasement, par pressage, par vissage, par collage, par rivetage, par pliage, ou par un procédé d'assemblage sous pression comme un clinchage ou un sertissage.

5. Élément profilé selon l'une au moins des revendications précédentes, **caractérisé en ce que** les tronçons longitudinaux (3, 4) sont réalisés d'une seule pièce l'un avec l'autre.

6. Élément profilé selon l'une au moins des revendications précédentes, **caractérisé en ce que** les tronçons longitudinaux (3, 4) sont réalisés séparément et sont reliés l'un avec l'autre.

7. Élément profilé selon la revendication 6,
**caractérisé en ce que** chaque tronçon longitudinal (3, 4) inclut une arête longitudinale rectiligne (11, 12) à l'opposé de son arête longitudinale (5, 6) en forme de méandres, et les tronçons longitudinaux (3, 4) sont reliés l'un à l'autre via les arêtes longitudinales rectilignes (11, 12) soit directement soit au moyen d'au moins un élément intermédiaire.

8. Élément profilé selon la revendication 7,
**caractérisé en ce que**
les arêtes longitudinales rectilignes (11, 12) reliées l'une à l'autre s'étendent à travers les tronçons (26),
et/ou
**en ce que** les arêtes longitudinales rectilignes (11, 12) s'étendent sensiblement parallèlement à l'extension longitudinale des tronçons longitudinaux (3, 4),
et/ou
**en ce que** les arêtes longitudinales rectilignes (11, 12) reliées l'une à l'autre des tronçons longitudinaux (3, 4) sont agencées en particulier au milieu à l'intérieur de l'âme de profilé (20),
et/ou
**en ce que** les arêtes longitudinales rectilignes (11, 12) sont reliées l'une à l'autre directement ou le cas échéant avec l'élément intermédiaire par soudage, par coincement, par écrasement, par pressage, par vissage, par collage, par rivetage, par pliage, ou par un procédé d'assemblage sous pression comme un clinchage ou un sertissage.

9. Élément profilé selon l'une au moins des revendications 6 à 8,
**caractérisé en ce que** les tronçons longitudinaux (3, 4) forment deux tronçons, assemblés l'un à l'autre le long des arêtes longitudinales (5, 6) en forme de méandres, d'un ruban de matériau (1) initialement unitaire.

10. Élément profilé selon l'une au moins des revendications précédentes,
**caractérisé en ce que**
les arêtes longitudinales (5, 6) en forme de méandres des tronçons longitudinaux (3, 4) sont réalisées de manière complémentaire l'une à l'autre,
et/ou
**en ce que** les tronçons longitudinaux (3, 4) sont formés du même matériau.

11. Élément profilé selon l'une au moins des revendications précédentes,
**caractérisé en ce que**
le corps de profilé (18) est réalisé comme un corps de profilé à paroi mince oeuvré à froid,
et/ou
**en ce que** les tronçons longitudinaux (3, 4) possèdent une épaisseur d'environ entre 0,5 mm et 3 mm.

12. Élément profilé selon l'une au moins des revendications précédentes,
**caractérisé en ce qu'**une cavité (24), s'étendant en direction longitudinale de la branche de profilé (21), est réalisée respectivement entre les parois (22, 23) de la branche de profilé (21) à paroi double.

13. Absorbeur de force, en particulier pare-chocs, comprenant un élément profilé selon l'une au moins des revendications précédentes.

14. Procédé pour réaliser un élément profilé selon l'une au moins des revendications 1 à 12,
**caractérisé en ce que**
pour produire l'élément profilé, on prépare un matériau de départ en forme de ruban étiré en longueur avec deux arêtes longitudinales (5, 6) en forme de méandres et disposées vers l'extérieur, et **en ce que** l'on rabat des tronçons longitudinaux (3, 4), du ruban de matériau, bordés par les arêtes longitudinales (5, 6) en forme de méandres, pour engendrer les branches de profilé (21), jusqu'à ce que les arêtes longitudinales (5, 6) en forme de méandres viennent en contact au moins localement avec des tronçons (26) du corps de profilé (18), situés entre les arêtes longitudinales (5, 6) en forme de méandres, suite à quoi celles-ci sont reliées avec ceux-ci.

15. Procédé pour réaliser un élément profilé selon l'une des revendications 1 à 12,
**caractérisé en ce que**
pour produire l'élément profilé, on prépare deux tronçons longitudinaux séparés (3, 4) ayant chacun une arête longitudinale (5, 6) en forme de méandres, et ayant chacun une arête longitudinale rectiligne (11, 12) à l'opposé de l'arête longitudinale (5, 6) en forme de méandres, et
**en ce que** les tronçons longitudinaux (3, 4) sont reliés l'un à l'autre via les arêtes longitudinales rectilignes (11, 12), et en particulier **en ce que**, dans un matériau de départ en forme de ruban (1) étiré en longueur, on ménage au moins une fente (2) en forme de méandres s'étendant dans l'extension longitudinale du matériau de départ (1), fente au moyen de laquelle le matériau de départ (1) est subdivisé pour donner les deux tronçons longitudinaux séparés (3, 4).
